# EUROPÄISCHE PATENTSCHRIFT

(11) **EP 0 778 872 B1**
(45) Veröffentlichungstag und Bekanntmachung des Hinweises auf die Patenterteilung: **11.08.1999**
(21) Anmeldenummer: 96920621.8
(22) Anmeldetag: 28.06.1996
(51) Int. Cl.: C10G 1/02, C10B 53/00

(54) **VERFAHREN ZUM KATALYTISCHEN KONVERTIEREN VON ORGANISCHEN ABFÄLLEN IM NIEDERTEMPERATURBEREICH**
PROCESS FOR THE LOW-TEMPERATURE CATALYTIC CONVERSION OF ORGANIC WASTE
PROCEDE DE CONVERSION CATALYTIQUE DE DECHETS ORGANIQUES A BASSE TEMPERATURE

(30) Priorität: 28.06.1995 AT 110395
(43) Veröffentlichungstag der Anmeldung: 18.06.1997
(73) Patentinhaber: Joas, Emil, Mag., A-4840 Vöcklabruck (AT); Hitzfelder, Johann, 4840 Vöcklabruck (AT); Pillichshammer, Franz, 4851 Gampern (AT); Sueti, Michael, 4040 Linz (AT)
(72) Erfinder: Joas, Emil, Mag., A-4840 Vöcklabruck (AT); Hitzfelder, Johann, 4840 Vöcklabruck (AT); Pillichshammer, Franz, 4851 Gampern (AT); Sueti, Michael, 4040 Linz (AT)
(74) Vertreter: Hübscher, Heiner, Dipl.-Ing.
(86) Internationale Anmeldenummer: AT9600113
(87) Internationale Veröffentlichungsnummer: WO9701616

(56) Entgegenhaltungen:
- EP-A- 0 031 939
- WO-A-91/11499

## Beschreibung

Die Erfindung bezieht sich auf ein Verfahren zum katalytischen Konvertieren von organischen Abfällen im Niedertemperaturbereich, wobei die zerkleinerten Abfälle im Bereich einer Konvertierungsstrecke unter Luftabschluß erwärmt werden und der bei verschiedenen Temperaturstufen mit den angefallenen Konvertierungsgasen aus der Konvertierungsstrecke abgezogene Gasstrom zur Kondensierung der bei den einzelnen Temperaturstufen anfallenden Konvertierungsgase gekühlt wird, bevor er der Konvertierungsstrecke wieder im Kreislauf zuströmt, sowie auf eine Vorrichtung zur Durchführung dieses Verfahrens.

Bei der katalytischen Konvertierung von organischen Abfällen im Niedertemperaturbereich wird der Umstand ausgenützt, daß heterocyclischer Verbindungen in Gegenwart von Oxiden, Silikaten und Phosphaten in einem Temperaturbereich im wesentlichen unter 450° C gespalten werden, und zwar ohne ein Aufbrechen von Kohlenstoff-Kohlenstoffbindungen. Da die Aufspaltung heterocyclischer Verbindungen in für diese Spaltung kennzeichnenden Temperaturstufen erfolgt, wurde bereits vorgeschlagen, die zerkleinerten organischen Abfälle beispielsweise mit Hilfe einer Förderschnecke über eine Konvertierungsstrecke zu fördem und während dieser Förderung allmählich zu erwärmen, um aus den in Förderrichtung aufeinanderfolgenden Abschnitten steigender Temperatur die bei den entsprechenden Temperaturstufen entstehenden Konvertierungsgase aus der Konvertierungsstrecke abziehen und kondensieren zu können. Das aus den Kondensatoren ausströmende Gas wird dannn zur Aufrechterhaltung der anaeroben Abfallerwärmung der Konvertierungsstrecke im Kreislauf wieder zugeführt. Da im allgemeinen die organischen Abfälle anorganische Begleitstoffe, beispielsweise Silikate, enthalten, ergibt sich häufig ein befriedigender Konvertierungsverlauf auch ohne gesonderte Katalysatorzusätze.

Obwohl Laboranlagen dieser Art die erwarteten Ergebnisse erbracht haben, konnten entsprechende Versuchsanlagen für größere Abfallmengen die in sie gesetzten Erwartungen nicht erfüllen, weil die zerekleinerten Abfälle nicht mit einer für die Behandlung in einzelnen Temperaturstufen ausreichenden Gleichmäßigkeit entlang der Konvertierungsstrecke wirtschaftlich erwärmt werden konnten. Einerseits muß mit einem schlechten Wärmeübergang von der Heizeinrichtung über das Gehäuse des Schnekkenförderers auf die in ihrer Zusammensetzung sehr uneinheitlichen Abfälle gerechnet werden und anderseits steht dem angestrebten getrennten Abzug der Konvertierungsgase aus den einzelnen Temperaturstufen der Umstand entgegen, daß die Erwärmung der einzelnen Abfallteilchen von außen nach innen erfolgt, was insbesondere bei größeren Abfallteilchen zu einer gleichzeitigen Konvertierung der Außenbereiche bei einer höheren Temperaturstufe als der Innenbereiche führt.

Der Erfindung liegt somit die Aufgabe zugrunde, diese Mängel zu vermeiden und ein Verfahren zum katalytischen Konvertieren von organischen Abfällen im Niedertemperaturbereich der eingangs geschilderten Art so zu verbessern, daß eine vollständige Konvertierung im Bereich der einzelnen Temperaturstufen mit einfachen, wirtschaftlichen Mitteln sichergestellt werden kann.

Die Erfindung löst die gestellt Aufgabe dadurch, daß die Abfälle in einem Kreislauf über die Konvertierungsstrecke geführt werden, die in Zeitintervallen von einer Temperaturstufe auf die nächst höhere Temperaturstufe erwärmt wird, daß die mit Hilfe eines Fördergasstromes aus Stickstoff entlang der Konvertierungsstrecke geförderten Abfälle nach der Konvertierungsstrecke aus dem im Kreislauf geführten Fördergasstrom ausgeschieden und vor der Konvertierungsstrecke wieder dem Fördergasstrom aufgegeben werden, von dem zumindest ein Teilstrom zur Kondensierung der Konvertierungsgase gekühlt wird, und daß die Länge der Zeitintervalle zwischen den Temperaturstufen in Abhängigkeit von der im Bereich der Konvertierungsstrecke anfallenden Zuwachsrate zumindest eines Konvertierungsgases, vorzugsweise des Kohlendioxids, gesteuert wird.

Da zufolge dieser Maßnahmen die Abfälle mit Hilfe eines Fördergasstromes im Kreislauf über die Konvertierungsstrecke bei einer bestimmten Temperaturstufe so lange im Kreislauf geführt werden können, bis die Konvertierung bei dieser Temperaturstufe vollkommen abgelaufen ist, wird trotz der uneinheitlichen Zusammensetzung der Abfälle eine Unabhängigkeit der Konvertierung von dieser Abfallzusammensetzung erreicht. Die Förderung der zerkleinerten Abfälle in einem Fördergasstrom bringt einen vorteilhaften Wärmeübergang auf die einzelnen Abfallteilchen mit sich, weil ja diese Abfallteilchen über den Fördergasstrom allseitig auf die jeweilige Temperaturstufe erwärmt werden, und zwar in vergleichsweise kurzer Zeit. Mit dem Einsatz von Stickstoff als Fördergas kann darüberhinaus der Vorteil einer einfachen Steuerung erzielt werden, weil in einer Stickstoffatmosphäre die wesentlichen Konvertierungsgase ohne weiteres bestimmt werden können. Zur Steuerung des Verfahrensablaufes braucht lediglich die Zuwachsrate zumindest eines der bei der jeweiligen Temperaturstufe entstehenden Konvertierungsgase gemessen und die Behandlungszeit der Abfälle bei dieser Temperaturstufe in Abhängigkeit von dieser Zuwachsrate gewählt zu werden. Ist die Konvertierung bei der jeweiligen Temperaturstufe abgeschlossen, so entsteht ja kein Konvertierungsgas mehr. Die Wärmebehandlung der Abfälle kann dann bei der jeweils nächsthöheren Temperaturstufe fortgeführt werden, bis nach Abschluß der Konvertierung Kohle mit gegebenenfalls anorganischen Rückständen übrig bleibt.

Zur Kondensierung der Konvertierungsgase müssen die Feststoffe aus dem die Konvertierungsgase aufnehmenden Fördergasstrom abgeschieden werden. um dem Fördergasstrom vor der Konvertierungsstrecke nach dem Ausscheiden der anfallenden Kondensate wieder zugeführt zu werden. Die Kühlung des Fördergasstromes zum Kondensieren der mitgeführten Konvertierungsgase macht eine entsprechende Wiedererwärmung des Fördergasstromes erforderlich. Damit die hiefür eingesetzten Energiemengen klein gehalten werden können, kann der Fördergasstrom nach dem Abscheiden der Abfälle in zwei Teilströme aufgeteilt werden, von denen der eine zur Korn densation der aufgenommenen Konvertierungsgase gekühlt wird, bevor er mit dem anderen ungekühlten Teilstrom vor der Konvertierungsstrecke wieder vereinigt wird, so daß sich eine entsprechend höhere Mischtemperatur des wiedervereinigten Fördergasstromes einstellt.

Wie sich gezeigt hat, ergibt sich in den einzelnen Temperaturstufen der Konvertierung ein für die Konvertierung kennzeichnender Verlauf der Zuwachsrate für das entstehende Kohlendioxid. Die Messung des Kohlendioxids kann daher besonders vorteilhaft für die Steuerung der Konvertierung bei den einzelnen Temperaturstufen ausgenützt werden. Neben dem Kohlendioxid kann aber auch mit Vorteil der Kohlenmonoxid- bzw. der Sauerstoffgehalt zur Konvertierungssteuerung herangezogen werden, insbesondere wenn diese Gasanteile zur Feinabstimmung zusätzlich überwacht werden.

Zur Durchführung des Verfahrens kann von einer Vomchtung mit einer Konvertierungsstrecke in Form eines über eine Heizeinrichtung beheizbaren Reaktors, der über eine Gasringleitung an wenigstens einen Kondensator angeschlossen ist, und mit einer Einrichtung zur Abfallförderung durch den Reaktor mit der Maßgabe ausgegangen werden, daß der Reaktor aus einem Steigrohr besteht, daß in die Gasringleitung auf der Austrittsseite des Steigrohres ein Feststoffabscheider und auf der Eintrittsseite ein Fördergebläse als Fördereinrichtung für den im Kreislauf über den Feststoffabscheider und eine Aufgabeleitung geführten Abfall eingeschaltet sind, die zwischen dem Fördergebläse und dem Steigrohr in die Gasringleitung mündet, und daß die Heizeinrichtung für das Steigrohr über eine an eine Mengenmeßeinrichtung für wenigstens ein Konvertierungsgas angeschlossene Steuereinrichtung in Abhängigkeit von der Zuwachsrate dieses Konvertierungsgases steuerbar ist. In dem Steigrohr des Reaktors können die zerkleinerten Abfälle im Fördergasstrom vorteilhaft auf die jeweilige Temperaturstufe erwärmt werden, wobei die bei der jeweiligen Temperaturstufe anfallenden Konvertierungsgase nach dem Abscheiden der Feststoffe mit dem Fördergas über die Gasringleitung dem Kondensator zugeleitet werden, zwischen dem und dem Reaktor das Fördergebläse für den Fördergasstrom vorgesehen ist. um eine geringere Wärmebelastung des Fördergebläses aufgrund des im Bereich des Kondensators abgekühlten Fördergasstromes zu erreichen. Die über den Feststoffabscheider aus dem Fördergasstrom ausgeschiedenen Abfallteilchen müssen der Gasringleitung über eine Aufgabeleitung nach dem Fördergebläse wieder zugeführt werden, damit eine von der Fördergeschwindigkeit unabhängige Behandlungszeit für die Abfälle durch deren Kreislaufführung ermöglicht wird. Die Behandlungstemperatur wird über die Heizeinrichtung des Reaktors eingestellt, der beispielsweise mit Hilfe heißer Rauchgase beheizt wird, die zwischen dem Steigrohr und einem das Steigrohr mit Abstand umschließenden Mantelrohr geführt werden, so daß über die Steigrohrwand der Fördergasstrom mit den Abfallteilchen entsprechend der jeweiligen Temperaturstufe erwärmt wird, solange das zu diesem Zweck überwachte Konvertierungsgas anfällt, das zu diesem Zweck über eine Mengenmeßeinrichtung erfaßt wird. Ist mit einer weitgehenden Kondensation des überwachten Konvertierungsgases zu rechnen, so kann die Heizeinrichtung für die nächsthöhere Temperaturstufe angesteuert werden, sobald der Gehalt des überwachten Konvertierungsgases unter einen vorgegebenen Wert gesunken ist. Sonst ist die jeweilige Zuwachsrate zu ermitteln und ihr Absinken unter einen Grenzwert zu überwachen.

Besonders vorteilhafte Konstruktionsverhältnisse ergeben sich, wenn der Feststoffabscheider mit der Aufgabeleitung für die Abfälle über einen Aufgabebehälter verbunden ist, der als Zwischenspeicher dienen kann und eine dosierte Abfallweitergabe ermöglicht. Um nicht den gesamten Fördergasstrom über den Kondensator führen zu müssen, kann schließlich die Gasringleitung zwischen dem Feststoffabscheider und dem Fördergebläse in parallelgeschaltete Äste verzweigt sein, von denen der eine den Kondensator enthält und der andere eine Umgehungsleitung für den Kondensator bildet, so daß der über die Umgehungsleitung geführte Gasstrom keiner Kühlung unterworfen wird und nach der Wiedervereinigung mit dem im Kondensator gekühlten Gasstrom des anderen Astes eine entsprechende Mischtemperatur erzwingt, die eine geringere Heizleistung der Heizeinrichtung für den Reaktor zur Beibehaltung der jeweiligen Temperaturstufe erfordert.

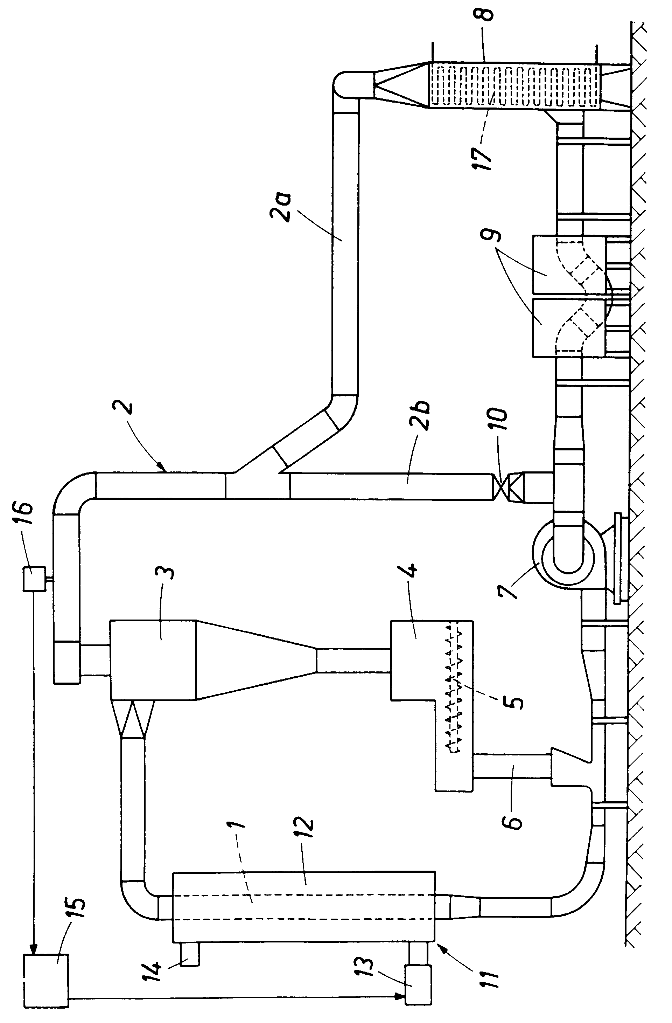

An Hand der Zeichnung wird das erfindungsgemäße Verfahren zum katalytischen Konvertieren von organischen Abfällen im Niedertemperaturbereich näher erläutert, und zwar am Beispiel einer in einem schematischen Blockschaltbild gezeigten erfindungsgemäßen Vorrichtung zur Durchführung des Verfahrens.

Die dargestellte Vomchtung zum zum katalytischen Konvertieren von organischen Abfällen im Niedertemperaturbereich besteht im wesentlichen aus einem als Steigrohr 1 ausgebildeten Reaktor, durch den die zerkleinerten Abfälle mit Hilfe eines Fördergasstromes aus Stickstoff im Kreislauf gefördert werden. Zu diesem Zweck ist auf der Steigrohraustrittsseite in die Gasringleitung 2 für den Fördergasstrom ein Feststoffabscheider 3, vorzugsweise ein Zyklon, eingeschaltet, der an einen Aufgabebehälter 4 angeschlossen ist. Aus diesem Aufgabebehälter 4 werden die Abfälle mit Hilfe einer Dosierschnecke 5 einer auf der Eintrittsseite des Steigrohres 1 in die Gasringleitung 2 mündenden Aufgabeleitung 6 zugefördert, die einem Fördergebläse 7 in der Gasringleitung 2 in Strömungsrichtung nachgeordnet ist. Zwischen dem Feststoffabscheider 3 und dem Fördergebläse 7 verzweigt sich die Gasringleitung 2 in zwei paralle Äste 2a und 2b, von denen der eine Ast 2a einen Brüdentrockner 8 und wenigstens einen Kondensator 9 enthält, während der andere Ast 2b eine Umgehungsleitung für den Kondensator 9 mit einer Drosselklappe 10 bildet.

Dem Steigrohr 1 ist eine Heizeinrichtung 11 zugheordnet, die ein das Steigrohr 1 mit radialem Abstand umschließendes Mantelrohr 12 aufweist, das unten an einen Brenner 13 und oben an eine Gasableitung 14 angeschlossen ist, so daß die heißen Rauchgase des Brenners 13 den Ringraum zwischen dem Steigrohr 1 und dem Mantelrohr 12 axial durchströmen und den das Steigrohr 1 durchsetzenden Fördergasstrom mit den über die Aufgabeleitung 6 zugeführten Abfallteilchen über die Steigrohrwandung auf eine vorgegebene Behandlungstemperatur erwärmen. Der Brenner 13 der Heizeinrichtung 11 ist dabei an eine Steuereinrichtung 15 angeschlossen, die von einer Mengenmeßeinrichtung 16 für zumindest eines der bei der jeweiligen Temperaturstufe anfallenden Konvertierungsgase, vorzugsweise Kohlendioxid, beaufschlagt wird und den Brenner in Abhängigkeit von der Zuwachsrate des jeweils gemessenen Konvertierungsgases bzw. der gemessenen Konvertierungsgase im Sinne einer stufenweisen Temperaturerhöhung des Steigrohres 1 ansteuert.

Die vorzerkleinerten organischen Abfälle, beispielsweise Kunststoff, Hausmüll oder Klärschlamm, werden in den Aufgabebehälter 4 gefüllt, aus diesem über die Dosierschnecke 5 ausgetragen und über die Aufgabeleitung 6 dem mittels des Fördergebläses 7 durch die Gasringleitung 2 geförderten Fördergasstrom aufgegeben. Die sich im Fördergasstrom aus Stickstoff verteilenden Abfallteilchen werden mit dem Fördergasstrom dem Steigrohr 1 zugeführt, wo sie über die Heizeinrichtung 11 zunächst vor allem zur Trocknung auf eine Temperaturstufe von beispielsweise 140° C erwärmt werden, um nach dieser Erwärmung über den Feststoffabscheider 3 aus dem Fördergasstrom ausgeschieden und im Kreislauf wieder dem Aufgabebehälter zugeführt zu werden. Der bei dieser Temperaturstufe neben anderen Konvertierungsgasen überwiegend anfallende Wasserdampf gelangt mit dem Fördergasstrom über den einen Ast 2a der Gasringleitung 2 zum Brüdentrockner 8, in dem vor allem der Wasserdampfanteil im Fördergasstrom durch eine Kühlung mit Hilfe von durch eine Rohrschlange 17 strömendes Kühlwasser kondensiert und als Brüdenwasser ausgeschieden wird. Die nachfolgenden Kondensatoren 9 können bei dieser Temperaturstufe noch außer Betrieb bleiben. Der im Brüdentrockner 8 gekühlte Fördergasteilstrom wird vor dem Fördergebläse 7 wieder mit dem über den Ast 2b strömenden, ungekühlten Teilstrom vereinigt, so daß sich für den vereinigten Fördergasstrom eine Mischtemperatur ergibt, von der der Fördergasstrom nach der Aufnahme der im Kreislauf geführten Abfallteilchen wieder über die Heizeinrichtung 11 auf die vorgegebene Temperaturstufe erwärmt werden muß. Diese Kreislaufführung einerseits des Fördergasstromes und anderseits der Abfallteilchen wird solange fortgesetzt, bis keine Konvertierungsgase mehr anfallen. Zu diesem Zweck wird über die Mengenmeßeinrichtung 16 die Zuwachsrate beispielsweise des bei der Konvertierung der Abfälle entstehenden Kohlendioxids bestimmt, um beim Absinken dieser Zuwachsrate unter einen vorgegebenen Grenzwert die Heizeinrichtung 11 über die Steuereinrichtung 15 für die nächste Temperaturstufe anzusteuem, die z. B. bei 240° C liegen kann. Bei dieser Temperaturstufe wiederholt sich der Verfahrensablauf, allerdings mit dem Unterschied, daß nunmehr die Kondensatoren 9 zugeschaltet werden, so daß aus den bei dieser Temperaturstufe abgespaltenen gasförmigen Fraktionen auch Gas und Öle kondensiert werden können. Die Länge des Zeitintervalles für die Behandlung der Abfälle bei dieser Temperaturstufe hängt wieder von der Zuwachsrate des Kohlendioxids ab, das in der Stickstoffatmosphäre des Fördergasstromes vergleichsweise einfach gemessen werden kann.

Die Konvertierung kann dann bei zwei weiteren Temperaturstufen beispielsweise bei 320° C und 420° C vervollständigt werden, bis Kohle mit den anorganischen Rückständen übrig bleibt. So konnte beispielsweise aus 1 t Hausmüll, der sich aus 470 kg Vegetabilien, 320 kg Papier und Pappe, 100 kg Kunststoffen, 60 kg Textilien, Holz, Leder, Knochen und Gummi, 35 kg Metallen sowie 15 kg Glas und anderen mineralischen Bestandteilen zusammensetzte, 274 kg Kohle, 174 kg Rohöl, 150 kg Konvertierungsgas und 35 kg Metalle als Wertstoffe gewonnen werden. Es fielen außerdem 15 kg an anorganischem Deponiegut und 352 kg Reaktionswasser an. Das Konvertierungsgas war frei von basischen Substanzen und enthielt Kohlendioxid, Kohlenmonoxid, Kohelnmonoxid und Methan als Hauptbestandteile, die ca. 99 % des Konvertierungsgases ausmachten. Da alle Schwefel- und Stickstoffverbindungen während des Konvertierungsverfahrens kondensiert wurden, ist eine Verbrennung des Konvertierungsgases problemlos möglich.

## Patentansprüche

1. Verfahren zum katalytischen Konvertieren von organischen Abfällen im Niedertemperaturbereich, wobei die zerkleinerten Abfälle im Bereich einer Konvertierungsstrecke unter Luftabschluß erwärmt werden und der bei verschiedenen Temperaturstufen mit den angefallenen Konvertierungsgasen aus der Konvertierungsstrecke abgezogene Gasstrom zur Kondensierung der bei den einzelnen Temperaturstufen anfallenden Konvertierungsgase gekühlt wird, bevor er der Konvertierungsstrecke wieder im Kreislauf zuströmt, dadurch gekennzeichnet, daß die Abfälle in einem Kreislauf über die Konvertierungsstrecke geführt werden, die in Zeitintervallen von einer Temperaturstufe auf die nächst höhere Temperaturstufe erwärmt wird, daß die mit Hilfe eines Fördergasstromes aus Stickstoff entlang der Konvertierungsstrecke geförderten Abfälle nach der Konvertierungsstrecke aus dem im Kreislauf geführten Fördergasstrom ausgeschieden und vor der Konvertierungsstrecke wieder dem Fördergasstrom aufgegeben werden, von dem zumindest ein Teilstrom zur Kondensierung der Konvertierungsgase gekühlt wird, und daß die Länge der Zeitintervalle zwischen den Temperaturstufen in Abhängigkeit von der im Bereich der Konvertierungsstrecke anfallenden Zuwachsrate zumindest eines Konvertierungsgases, vorzugsweise des Kohlendioxids, gesteuert wird.

2. Verfahren nach Anspruch 1, dadurch gekennzeichnet, daß der Fördergasstrom nach dem Abscheiden der Abfälle in zwei Teilströme geteilt wird, von denen der eine zur Kondensation der mitgeführten Konvertierungsgase gekühlt wird, bevor er mit dem anderen ungekühlten Teilstrom vor der Konvertierungsstrecke wieder vereinigt wird.

3. Verfahren nach Anspruch 1 oder 2, dadurch gekennzeichnet, daß die Länge der Zeitintervalle zwischen den Temperaturstufen in Abhängigkeit von der im Bereich der Konvertierungsstrecke anfallenden Zuwachsrate des Kohlendioxids bzw. des Kohlenmonoxids bzw. des Sauerstoffes gesteuert wird.

4. Vorrichtung zur Durchführung des Verfahrens nach einem der Ansprüche 1 bis 3 mit einer Konvertierungsstrecke in Form eines über eine Heizeinrichtung beheizbaren Reaktors, der über eine Gasringleitung an wenigstens einen Kondensator angeschlossen ist, und mit einer Einrichtung zur Abfallförderung durch den Reaktor, dadurch gekennzeichnet, daß der Reaktor aus einem Steigrohr (1) besteht, daß in die Gasringleitung (2) auf der Austrittsseite des Steigrohres ein Feststoffabscheider (3) und auf der Eintrittsseite ein Fördergebläse (7) als Fördereinrichtung für den im Kreislauf über den Feststoffabscheider (3) und eine Aufgabeleitung (6) geführten Abfall eingeschaltet sind, die zwischen dem Fördergebläse (7) und dem Steigrohr (1) in die Gasringleitung (2) mündet, und daß die Heizeinrichtung (11) für das Steigrohr (1) über eine an eine Mengenmeßeinrichtung (16) für wenigstens ein Konvertierungsgas angeschlossene Steuereinrichtung (15) in Abhängigkeit von der Zuwachsrate dieses Konvertierungsgases steuerbar ist.

5. Vorrichtung nach Anspruch 4, dadurch gekennzeichnet, daß der Feststoffabscheider (3) mit der Aufgabeleitung (6) für die Abfälle über einen Aufgabebehälter (4) verbunden ist.

6. Vorrichtung nach Anspruch 4 oder 5, dadurch gekennzeichnet, daß die Gasringleitung (2) zwischen dem Feststoffabscheider (3) und dem Fördergebläse (7) in parallelgeschaltete Äste (2a, 2b) verzweigt ist, von denen der eine den Kondensator (9) enthält und der andere eine Umgehungsleitung für den Kondensator (9) bildet.

## Claims

1. A method of catalytically converting organic waste in the low temperature range, the comminuted waste being heated in the region of a conversion zone with the exclusion of air and the gas stream withdrawn from the conversion zone at different temperature stages together with the accumulating conversion gases being cooled in order to condense the conversion gases accumulating at the individual temperature stages before it cyclically flows back to the conversion zone, characterised in that the waste is fed in a cycle through the conversion zone which at intervals of time is heated from one temperature stage to the next highest temperature stage, in that the waste conveyed along the conversion zone by means of a feed gas stream consisting of nitrogen is separated, after the conversion zone, from the cycled feed gas stream and is returned to the latter before the conversion zone, at least part of the feed gas stream being cooled to condense the conversion gases, and in that the length of the intervals of time between the temperature stages is controlled in dependence on the growth rate of at least one conversion gas, preferably carbon dioxide, accumulating in the conversion zone region.

2. A method according to claim 1, characterised in that after the separation of the waste the feed gas stream is divided into two sub-streams, one of which is cooled for condensation of the entrained conversion gases before being combined with the other uncooled sub-stream before the conversion zone.

3. A method according to claim 1 or 2, characterised in that the length of the intervals of time between the temperature stages is controlled in dependence on the growth rate of the carbon dioxide, carbon monoxide, or oxygen accumulating in the conversion zone region.

4. Apparatus for performing the method according to any one of claims 1 to 3, comprising a conversion zone in the form of a reactor which is heatable by means of a heating device and which is connected, via a gas ring main, to at least one condenser, and comprising a means for conveying the waste through the reactor,
characterised in that the reactor consists of a riser (1), in that a solids separator (3) is connected in the gas ring main (2) on the riser outlet side and a pneumatic conveyor (7) as a feed device for the waste fed in the cycle through the solids separator (3) and a feed line (6) is connected on the entry side, said feed line (6) leading into the gas ring main (2) between the pneumatic conveyor (7) and the riser (1), and in that the heating device (11) for the riser (1) is controllable in dependence on the growth rate of at least one conversion gas via a control device (15) connected to a flowmeter device (16) for said conversion gas.

5. Apparatus according to claim 4, characterised in that the solids separator (3) is connected to the feed line (6) for the waste via a feed container (4).

6. Apparatus according to claim 4 or 5, characterised in that the gas ring main (2) branches between the solids separator (3) and the pneumatic conveyor (7) into parallel-connected branches (2a, 2b), one of which contains the condenser (9) and the other forms a bypass line for the condenser (9).

## Revendications

1. Procédé de conversion catalytique de déchets organiques dans la plage des basses températures, les déchets ayant été broyés étant chauffés avec confinement vis-à-vis de l'air dans la zone d'une veine de conversion, et le flux de gaz extrait depuis la veine de conversion, à différents niveaux de température, avec les gaz de conversion produits, étant refroidi pour condensation des gaz de conversion produits aux différents niveaux de température, avant que le flux de gaz ne soit retourné à la veine de conversion, en formant un circuit fermé, caractérisé par le fait que les déchets sont guidés en circuit fermé en passant par la veine de conversion, qui par intervalles temporels, est chauffée d'un niveau de température au niveau de température subséquent plus élevé, par le fait que les déchets véhiculés le long de la veine de conversion, à l'aide d'un flux de gaz de transport constitué d'azote, sont séparés après la veine de conversion hors du flux de gaz de transport guidé en circuit fermé et sont refournis, avant la veine de conversion, au flux de gaz de transport dont au moins un flux partiel est refroidi dans le but de la condensation des gaz de conversion, et par le fait que la longueur des intervalles de temps entre les niveaux de température est commandée en fonction du taux de croissance, se manifestant dans la zone de la veine de conversion, d'au moins un gaz de conversion, de préférence du dioxyde de carbone.

2. Procédé selon la revendication 1, caractérisé par le fait que, après la séparation vis-à-vis des déchets, le flux de gaz de transport est subdivisé en deux flux partiels, dont l'un est refroidi dans le but de condensation des gaz de conversion entraînés, avant d'être de nouveau réuni à l'autre flux partiel, non refroidi, avant la veine de conversion.

3. Procédé selon la revendication 1 ou 2, caractérisé par le fait que la longueur de l'intervalle de temps entre les niveaux de température est commandée en fonction du taux de croissance, se manifestant dans la zone de la veine de conversion, concernant le dioxyde de carbone et/ou le monoxyde de carbone et/ou l'oxygène.

4. Dispositif de mise en oeuvre du procédé selon l'une des revendications 1 à 3, avec une veine de conversion réalisée sous la forme d'un réacteur pouvant être chauffé par un dispositif de chauffage, réacteur qui est raccordé, par une conduite annulaire de gaz, à au moins un condenseur, et avec un dispositif destiné à transporter les déchets à travers le réacteur, caractérisé par le fait que le réacteur est constitué d'un tube montant (1), par le fait que sont mis en circuit, dans la conduite annulaire de gaz (2), du côté sortie du tube montant, un séparateur de solides (3) et, du côté entrée, une soufflante de circulation (7) à titre de dispositif de transport pour les déchets guidés en circuit fermé en passant par le séparateur à solide (3) et une conduite d'alimentation (6), conduite d'alimentation qui débouche dans la conduite annulaire de gaz (2), entre la soufflante de transport (7) et le tube montant (1), et par le fait que le dispositif de chauffage (11) du tube montant (1) peut être commandé par l'intermédiaire d'un dispositif de commande (15) raccordé à un dispositif de mesures de débit (16) pour au moins un gaz de conversion, en fonction du taux de croissance de ce gaz de conversion.

5. Dispositif selon la revendication 4, caractérisé par le fait que le séparateur à solides (3) est relié à la conduite d'alimentation (6) des déchets, par l'intermédiaire d'un récipient d'alimentation (4).

6. Dispositif selon la revendication 4 ou 5, caractérisé par le fait que la conduite annulaire de gaz (2) est ramifiée entre le séparateur à solides (3) et la soufflante de transport (7) en donnant des embranchements (2a, 2b) installés en parallèle, dont l'un contient le condenseur (9) et l'autre constitue une conduite de contournement du condenseur (9).
